(19)

Europäisches Patentamt
European Patent Office
Office européen des brevets

(11)  **EP 2 833 102 A2**

(12)  # EUROPEAN PATENT APPLICATION

(43) Date of publication:
04.02.2015 Bulletin 2015/06

(51) Int Cl.:
*G01D 5/353* (2006.01)

(21) Application number: 14179270.5

(22) Date of filing: 31.07.2014

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **02.08.2013 JP 2013161031**

(71) Applicant: **Anritsu Corporation
Atsugi-shi
Kanagawa 243-8555 (JP)**

(72) Inventors:
• **Saitoh, Takanori
Kanagawa, 243-8555 (JP)**
• **Furukawa, Hiroshi
Kanagawa, 243-8555 (JP)**

(74) Representative: **Vigand, Philippe et al
Novagraaf International SA
3 chemin de l'Echo
1213 Onex Geneva (CH)**

(54) **Physical quantity measuring system and physical quantity measuring method**

(57)     According to one embodiment, a physical quantity measuring system includes an optical source (12) configured to emit a measurement light to a plurality of fiber Bragg grating (FBG) lines containing FBGs connected in cascade by an optical fiber, the measurement light including a reflected wavelength of at least one of the FBGs included in the FBG lines, an optical switch (13) including a common port for receiving the measurement light from the optical source (12), and a plurality of input/output ports connected to the plurality of FBG lines, the optical switch being configured to output the measurement light, from the common port to each of the plurality of input/output ports at different time points, a wavelength separator (15) configured to receive light reflected from the respective FBGs of the FBG lines and to separate the reflected light into a plurality of component lights having predetermined wavelengths, after the measurement light is output from one of the input/output ports of the optical switch (13), and optical receivers (16) configured to receive the component lights from the wavelength separator (15) and detect light intensities of the component lights.

F I G. 1

**Description**

The present invention relates to a physical quantity measuring system and a physical quantity measuring method for measuring physical quantities, using a fiber Bragg grating (FBG) line that is formed of a plurality of FBGs connected in cascade by optical fiber.

A physical quantity measuring system has been proposed in which one or more FBGs are formed in an optical fiber for receiving a measurement light, and a wavelength reflected from each FBG is measured to thereby measure a physical quantity, such as temperature or distortion, at each FBG. In this physical quantity measuring system, light reflected from each FBG is made to enter an arrayed waveguide grating (AWG), and the light intensity of each wavelength separated by the AWG is detected by an optical receiver, thereby measuring the reflected wavelengths of the FBGs.

In the invention disclosed in Jpn. Pat. Appln. KOKAI Publication No. 2000-180270, a wavelength range in which the wavelength sensitivity of each optical receiver is substantially linear is employed, and wavelength measurement is performed using a quadratic function. This enables the reflected wavelength of each FBG to be measured with a higher accuracy than the wavelength channel interval of the AWG.

In the invention disclosed in Jpn. Pat. Appln. KOKAI Publication No. 2008-151574, it is determined, using the light intensities of adjacent wavelength channels, whether the reflected wavelength has shifted to a long-wavelength side or a short-wavelength side. By virtue of this technique, the invention of Jpn. Pat. Appln. KOKAI Publication No. 2008-151574 can accurately measure the reflected wavelengths of the FBGs even when they are close to the central wavelength of the AWG.

In the meantime, airplanes using carbon-fiber-reinforced plastic (CFRP) as the material of their airframe members have recently been built. CFRP is stronger and lighter than metals. However, upon receiving an impact, it may suffer an internal crack even though its surface is in good condition. This crack may grow and reduce the airframe strength. To avoid it, researches have been advanced, in which an FBG as a distortion sensor is attached to CFRP and used to measure so-called dynamic distortion (dynamic physical quantity), such as distortion occurring upon receiving an impact. Since the airframe surface area is huge, it is necessary to use several tens of FBGs to detect all impacts. FBGs can be connected in series with their reflected wavelengths shifted. However, only about 10 FBGs can be connected in one FBG line.

Therefore, it is required to substantially simultaneously measure physical quantities at several points using a plurality of FBG lines. However, the inventions disclosed in Jpn. Pat. Appln. KOKAI Publications Nos. 2000-180270 and 2008-151574 are constructed on the assumption of measurement using a single FBG line. Accordingly, physical quantities cannot be simultaneously measured at a plurality of points. In contrast, Jpn. Pat. Appln. KOKAI Publication No. 2002-352369 has proposed a switching method using an optical switch as a method of performing measurements associated with a plurality of FBG lines. In this case, however, to measure a dynamic physical quantity, it is necessary to first stop a wavelength scanner and make a comparison with a correction curve beforehand stored in a data processor. This method is disadvantageous because it requires a complex measuring device and/or a complex procedure.

In view of the above, the present invention aims to provide a physical quantity measuring system and a physical quantity measuring method capable of simultaneously measuring physical quantities at a plurality of points. The present invention is particularly suitable for measuring a dynamic physical quantity.

According to a first aspect of the invention, there is provided a physical quantity measuring system comprising:

an optical source (12) configured to emit a measurement light to a plurality of fiber Bragg grating (FBG) lines containing FBGs connected in cascade by an optical fiber, the measurement light including a reflected wavelength of at least one of the FBGs included in the FBG lines;
an optical switch (13) including a common port for receiving the measurement light from the optical source (12), and a plurality of input/output ports connected to the plurality of FBG lines, the optical switch being configured to output the measurement light from the common port to each of the plurality of input/output ports at different time points;
a wavelength separator (15) configured to receive light reflected from the respective FBGs of the FBG lines and to separate the reflected light into a plurality of component lights having predetermined wavelengths, after the measurement light is output from one of the input/output ports of the optical switch (13); and
optical receivers (16) configured to receive the component lights from the wavelength separator (15) and detect light intensities of the component lights.

According to a second aspect of the invention, the physical quantity measuring system of the first aspect further comprises optical circulators (18) interposed between the optical switch (13) and the respective FBG lines and configured to input, to the FBG lines, the measurement light output from the optical switch (13), and to guide light reflected from the FBG lines to the wavelength separator (15).

According to a third aspect of the invention, in the physical quantity measuring system of the first aspect, the optical switch (13) is further configured to receive light reflected from the respective FBGs of the FBG lines through the input/output ports, and output the reflected light through the common port. The system of the first aspect further comprises an optical circulator (18) interposed between the optical source (12) and the optical switch (13), and configured to guide the reflected light from the common port of the optical switch (13) to the wavelength separator (15).

According to a fourth aspect of the invention, in the physical quantity measuring system of any one of the first, second and third aspects, the optical switch (13) comprises a lithium niobate ($LiNbO_3$) optical waveguide or a lanthanum-added lead zirconium titanate (PLZT) optical waveguide.

According to a fifth aspect of the invention, the physical quantity measuring system of any one of the first, second, third and fourth aspects further comprises a reflected-wavelength calculator (20) configured to receive light intensity signals corresponding to the component lights of the predetermined wavelengths detected by the optical receivers (16), and to analyze a light intensity of each of the component lights at a time point $t_n$.

According to a sixth aspect of the invention, in the physical quantity measuring system of the fifth aspect, the reflected-wavelength calculator (20) detects a wavelength providing a local maximum light intensity, based on the light intensities of the component lights detected by the optical receivers (16), and calculates the reflected wavelength of the at least one FBG using the light intensity of the wavelength providing the local maximum light intensity and light intensities of component lights with two wavelengths adjacent thereto.

According to a seventh aspect of the invention, in the physical quantity measuring system of the fifth or sixth aspect, the reflected-wavelength calculator (20) obtains light intensities of the component lights by obtaining series of values from the received light intensity signals of the component lights, the series of values being not lower than a predetermined value, and varying within a predetermined range.

According to an eighth aspect of the invention, the physical quantity measuring system of any one of the fifth, sixth and seventh aspects further comprises an information processing module (17) interposed between the optical receivers (16) and the reflected-wavelength calculator (20) to sequentially output, to the reflected-wavelength calculator (20), the light intensity signals of the component lights detected by the optical receivers (16).

According to a ninth aspect of the invention, there is provided a physical quantity measuring method comprising:

inputting, to a common port of an optical switch (13), a measurement light including a reflected wavelength of at least one of FBGs included in FBG lines, with the FBG lines connected to each of a plurality of input/output ports of the optical switch (13), the FBG lines containing the FBGs connected in cascade by an optical fiber;
outputting the measurement light, input to the optical switch (13), from each of the input/output ports at different time points;
receiving light reflected from the respective FBGs of the FBG lines, and separating the reflected light into a plurality of component lights having predetermined wavelengths, using a wavelength separator (15); and
receiving the component lights and detecting light intensities of the component lights, using optical receivers (16).

According to a tenth aspect of the invention, the physical quantity measuring method of the ninth aspect further comprises inputting, to the FBG lines, the measurement light from the optical switch (13) and guiding light reflected from the FBG lines to the wavelength separator (15), using optical circulators (18) interposed between the optical switch (13) and the respective FBG lines.

According to an eleventh aspect of the invention, in the physical quantity measuring method of the ninth aspect, the optical switch (13) is configured to receive light reflected from the respective FBGs of the FBG lines, using the input/output ports, and outputs the reflected light through the common port. The method of the eleventh aspect further comprises inputting, to the common port, the measurement light from an optical source (12) configured to emit the measurement light, and guiding the reflected light from the common port of the optical switch (13) to the wavelength separator (15), using an optical circulator (18) interposed between the optical source (12) and the common port of the optical switch (13).

According to a twelfth aspect of the invention, in the physical quantity measuring method of any one of the ninth to eleventh aspects, the optical switch (13) comprises a lithium niobate ($LiNbO_3$) optical waveguide or a lanthanum-added lead zirconium titanate (PLZT) optical waveguide.

According to a thirteenth aspect of the invention, the physical quantity measuring method of any one of the ninth to twelfth aspects further comprises receiving light intensity signals corresponding to the component lights detected by the optical receivers (16), and analyzing a light intensity of each of the component lights at a time point $t_n$, using a reflected-wavelength calculator (20).

According to a fourteenth aspect of the invention, in the physical quantity measuring method of the thirteenth aspect, in the analysis by the reflected-wavelength calculator (20), a wavelength providing a local maximum light intensity is detected based on the light intensities of the component lights detected by the optical receivers (16), and the reflected wavelength of the at least one FBG is calculated, using the light intensity of the wavelength providing the local maximum light intensity and light intensities of component lights with two wavelengths adjacent thereto.

According to a fifteenth aspect of the invention, in the physical quantity measuring method of the thirteenth or fourteenth aspect, in the analysis by the reflected-wavelength calculator (20), light intensities of the component lights are obtained by obtaining series of values from the received light intensity signals of the component lights, the series of values being not lower than a predetermined value, and varying within a predetermined range.

According to a sixteenth aspect of the invention, the physical quantity measuring method of any one of the thirteenth to fifteenth aspects further comprises sequentially outputting, to the reflected-wavelength calculator (20), the light intensity signals of the component lights detected by the optical receivers (16), using an information processing module (17) interposed between the optical receivers (16) and the reflected-wavelength calculator (20).

The invention can be more fully understood from the following detailed description when taken in conjunction with the accompanying drawings, in which:

FIG. 1 is a block diagram showing an example of a physical quantity measuring system according to a first embodiment of the invention;

FIG. 2 shows an example of an optical switch in the physical quantity measuring system of the first embodiment;

FIG. 3 shows examples of data output from an information processing module to a control PC in the physical quantity measuring system of the first embodiment, (a) indicating wavelength channel ch1, (b) indicating wavelength channel ch2, and (c) indicating wavelength channel ch48;

FIG. 4 is a block diagram showing an example of a physical quantity measuring system according to a second embodiment of the invention;

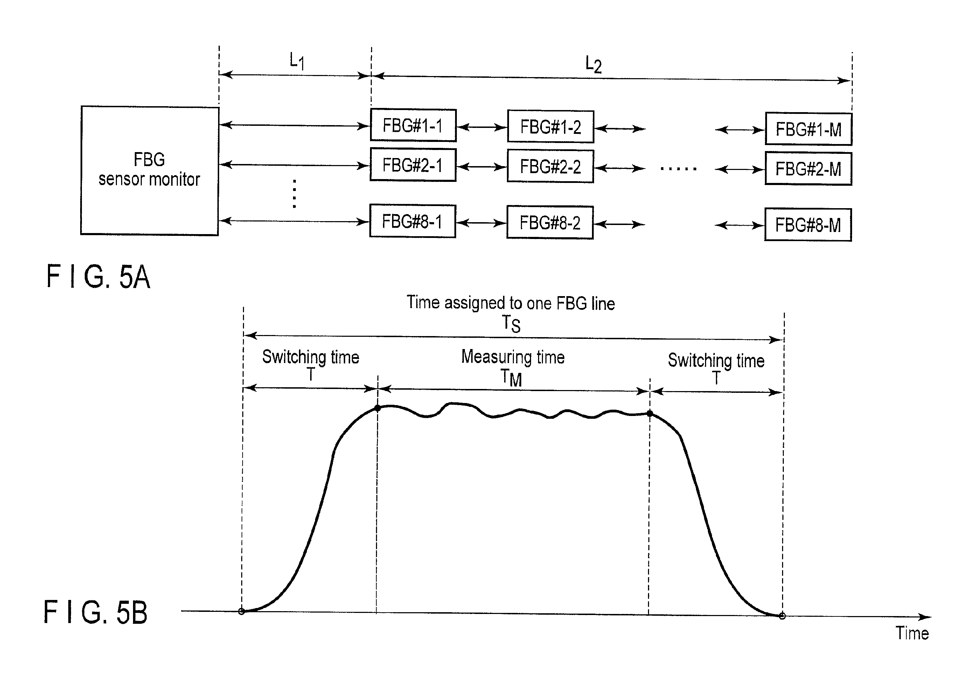

FIG. 5A shows distances between an FBG sensor monitor in the physical quantity measuring systems of the embodiments and respective FBGs;

FIG. 5B shows the relationship between the time assigned to one FBG line and the measurement time, according to the physical quantity measuring systems of the embodiments;

FIG. 6 shows examples of data items input to a sampling processing module per one optical receiver in each of the physical quantity measuring systems of the embodiments;

FIG. 7 shows sampling examples corresponding to one FBG line of the output of one photo receiver in each of the physical quantity measuring systems of the embodiments;

FIG. 8 shows examples of reflected light levels of ch1 to ch48 at time point t3 in the physical quantity measuring systems of the embodiments;

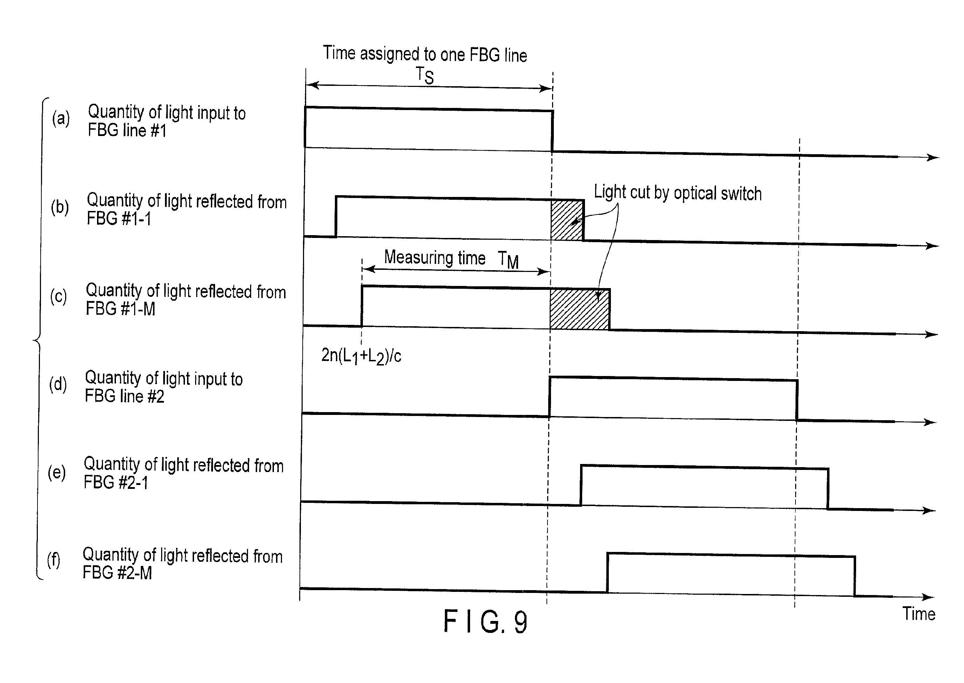

FIG. 9 shows a relationship example between switching of an optical switch and the levels of light reflected from FBG lines #1 and #2 in the physical quantity measuring system of the first embodiment; and

FIG. 10 shows a relationship example between switching of an optical switch and the levels of light reflected from FBG lines #1 and #2 in the physical quantity measuring system of the second embodiment.

Embodiments of the invention will be described with reference to the accompanying drawings. The embodiments described below are just examples, and the invention is not limited to them. In the description below and the drawings, like reference numbers denote like elements.

(First embodiment)

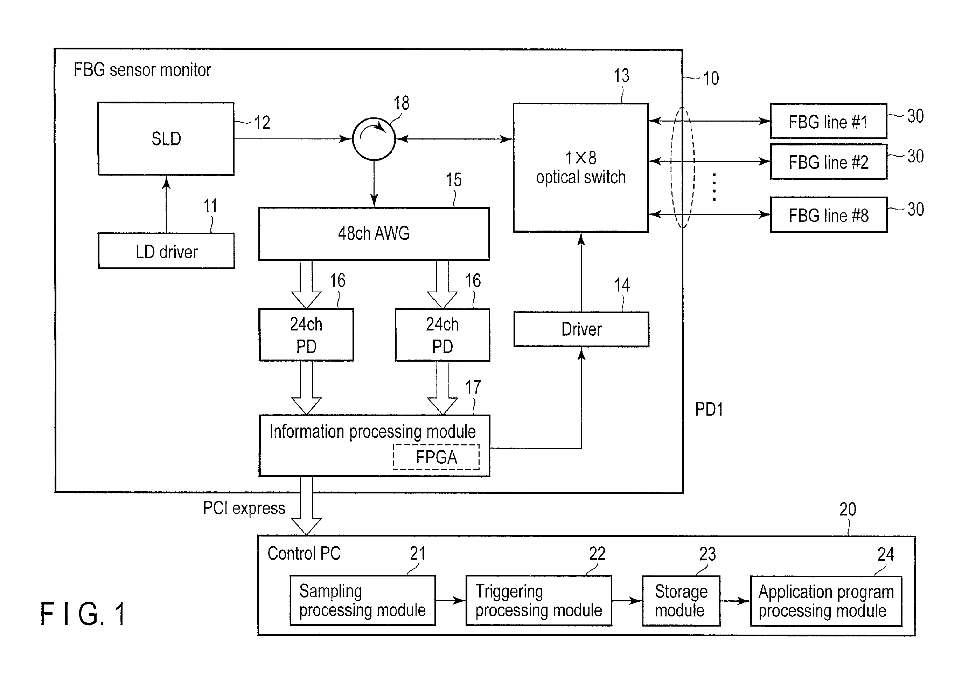

FIG. 1 shows an example of a physical quantity measuring system according to a first embodiment. The physical quantity measuring system of the first embodiment comprises an FBG sensor monitor 10, and a control PC as a reflected wavelength calculator. The FBG sensor monitor 10 inputs a measurement light to a plurality of FBG lines 30, receives a reflected light therefrom, and outputs a received light signal to the control PC 20. Each of the FBG lines 30 is formed of a plurality of FBGs connected in cascade by optical fiber.

The FBG sensor monitor 10 comprises an LD driver 11, a super luminescent diode (SLD) 12 serving as an optical source, an optical switch 13, a driver 14, an AWG 15 serving as a wavelength separator, PDs 16 serving as optical receivers, an information processing module 17, and a circulator 18. For instance, in the first embodiment, the optical switch 13 has 1 x 8 ports, the AWG 15 has 48 wavelength channels, and the PDs 16 each have 24 channels.

As the SLD 12, such an ASE optical source as disclosed in Jpn. Pat. Appln. KOKAI Publication No. 8-88643 may be used. The wavelength separator and the PD may be formed of a spectroscope, as disclosed in Jpn. Pat. Appln. KOKAI Publication No. 2004-56700, which comprises a diffraction grating, a reflection mirror and a photodiode array.

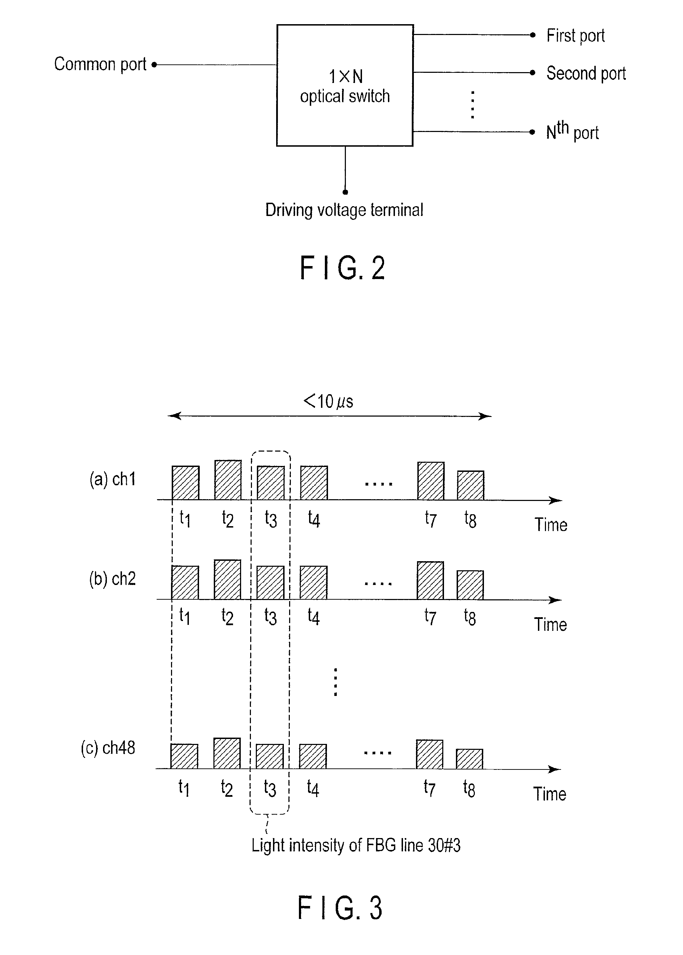

The optical switch 13 has a characteristic of switching, among the first to $N^{th}$ input/output ports, one input/output port to be connected to a common port when an external voltage is applied thereto, as is shown in FIG. 2. In particular, in the invention, an optical switch is appropriate, which uses a lithium niobate ($LiNbO_3$) optical waveguide excellent in speed, i.e., having a switching time period of 10 nanoseconds or less, or uses a lanthanum-added lead zirconium titanate (PLZT) optical waveguide. In this specification, the circulator 18 is connected to the common port, the FBG lines 30 are connected to the first to eighth input/output ports, and any one of the first to eighth input/output ports is connected to the common port. The FBG lines 30 each comprise a plurality of FBGs connected in cascade in optical fiber. The driver 14 sequentially switches the first to eighth input/output ports to be connected to the common port of the optical switch 13, in accordance with an instruction from the information processing module 17. As a result, the optical switch 13 inputs a measurement light, received through the common port, to each of the FBG lines 30 at different times.

A description will now be given of a physical quantity measuring method according to the first embodiment. The physical quantity measuring method of the first embodiment includes a light output procedure and a light receiving procedure in this order.

In the light output procedure, the FBG sensor monitor 10 inputs a measurement light to the FBG lines 30. At this time, the LD driver 11 drives the SLD 12. The SLD 12 generates a measurement light containing a reflected wavelength corresponding to at least one of the FBGs included in each FBG line 30. The measurement light from the SLD 12 enters the circulator 18 and then enters the optical switch 13 through the circulator 18. The optical switch 13 sequentially outputs measurement lights at different times through the first to eighth input/output ports in accordance with the operation of the driver 14. The light reaching the FBG lines 30 is reflected by the respective certain FBGs. Each FBG line may include an arbitrary number of FBGs.

In the receiving procedure, the FBG sensor monitor 10 detects the intensity of the light obtained when the measurement light is applied to the FBG lines 30 and is then reflected therefrom. At this time, the light reflected from the FBG lines 30 is input to the first to eighth input/output ports of the optical switch 13, and is output from the common port. The reflected light output from the optical switch 13 is input to the circulator 18 and then input to the AWG 15 from the circulator 18. The AWG 15 separates the reflected light into predetermined wavelengths of 48 channels, and outputs them to the PDs 16. The PDs 16 detect the intensities of the 48-channel wavelengths of the reflected light. The information processing module 17 outputs the light intensities detected by the PDs 16 to the control PC 20 in association with each of the wavelength channels.

FIG. 3 shows examples of data items output from the information processing module 17 to the control PC 20, (a) indicating wavelength channel ch1, (b) indicating wavelength channel ch2, and (c) indicating wavelength channel ch48. More specifically, FIG. 3 shows a case where the optical switch 13 outputs light to an FBG line #1 30 at a time point t1, outputs light to an FBG line #2 30 at a time point t2, ..., and lastly outputs light to an FBG line #8 30 at a time point t8.

The control PC 20 analyzes the light intensities of the wavelength channels ch1 to ch48 at the time point t1 to measure the reflected wavelengths of the FBGs in the FBG line #1 30. Similarly, by analyzing the light intensities of the wavelength channels ch1 to ch48 at time points t2 to t8, the reflected wavelengths of the FBGs in the FBG lines #2 to #8 can be measured.

(Second embodiment)

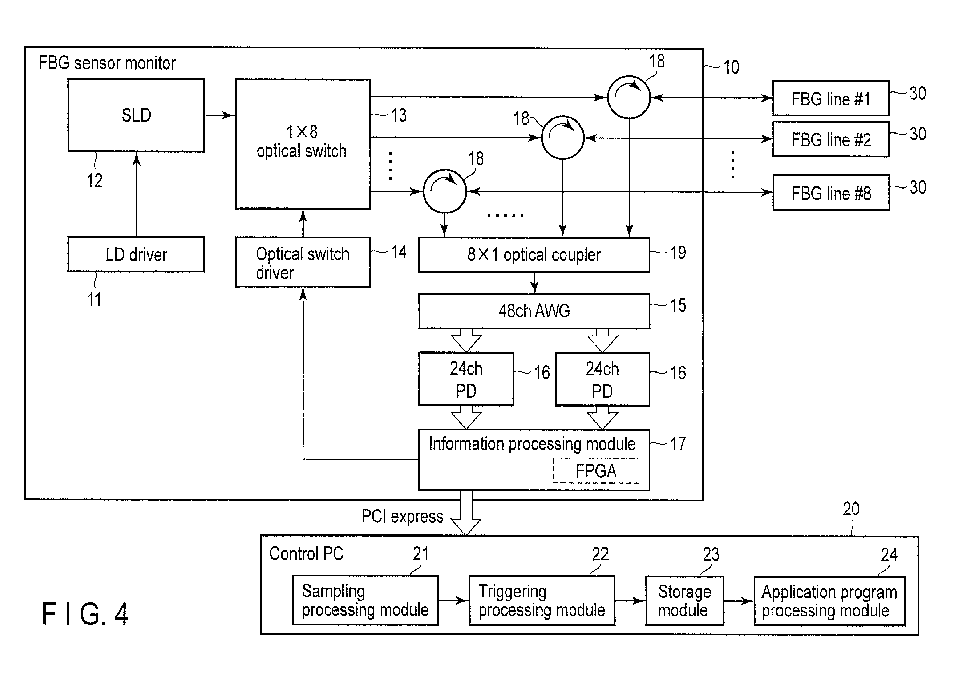

FIG. 4 shows an example of a physical quantity measuring system according to a second embodiment. In the physical quantity measuring system of the second embodiment, optical circulators 18 are interposed between the optical switch 13 and the respective FBG lines 30. Thus, in the second embodiment, the optical circulators 18 are provided for the respective input/output ports of the optical switch 13.

The measurement light output from the SLD 12 is input to the optical switch 13. The optical switch 13 sequentially outputs the measurement light from the first to eighth input/output ports. Each circulator 18 outputs, to a corresponding one of the FBG lines 30, the measurement light received from the optical switch 13.

The light reflected from each FBG line 30 is input to a corresponding circulator 18 and then to an optical coupler 19. Since in the second embodiment, the optical switch 13 is of a 1 x 8 type, the optical coupler 19 is of an 8 x 1 type. The optical coupler 19 outputs, to the AWG 15, the reflected light output from the circulators 18. The operations of the AWG 15, et seq., are similar to those described in the first embodiment.

Optical switches 13 may have a polarization-dependent property. The above-mentioned lithium niobate (LiNbO$_3$) optical waveguide switches, in particular, often have this property. For instance, they may function as optical switches only for P polarization, but function simply as optical couplers for S polarization. If the SLD 12 has a sufficient polarization distinction ratio and its output fiber is a polarization maintaining optical fiber, the polarization of light entering the common port of the optical switch 13 can be always made to be P polarization. However, the polarization of the light reflected from each FBG line 30 is uncertain. Accordingly, if the light reflected from each FBG line 30 is made to directly enter the optical switch 13, it is uncertain whether the optical switch 13 functions as an optical switch. However, in the second embodiment, since the reflected light is guided to the AWG 15 without being passed through the optical switch 13, it is not influenced by the polarization dependence property of the optical switch 13. Thus, even when the optical switch 13 has a polarization dependence property, the reflected wavelength of a certain FBG in each FBG line 30 can be accurately detected.

Further, in the first embodiment, in order to cause the light reflected from the certain FBG to re-pass through the optical switch, the measurable distance between the FBG sensor monitor 10 and the FBG positioned at the furthest end of each FBG line (i.e., the sum of the distance L1 between the FBG sensor monitor 10 and the first FBG in each FBG line, and the distance L2 between the first FBG and the last (furthest) FBG in each FBG line), as shown in FIGS.

5A, 5B and 9, should satisfy the following equation (1):

$$TM = Ts - 2n(L1 + L2)/c \qquad (1)$$

where TM is the measuring time, TS is the time assigned to each FBG line, n is the refraction factor of the fiber, and c is the speed of light. To execute a measurement, TM > 0 should be satisfied, the following relationship is established:

$$L1 + L2 < Ts \times c/(2n)$$

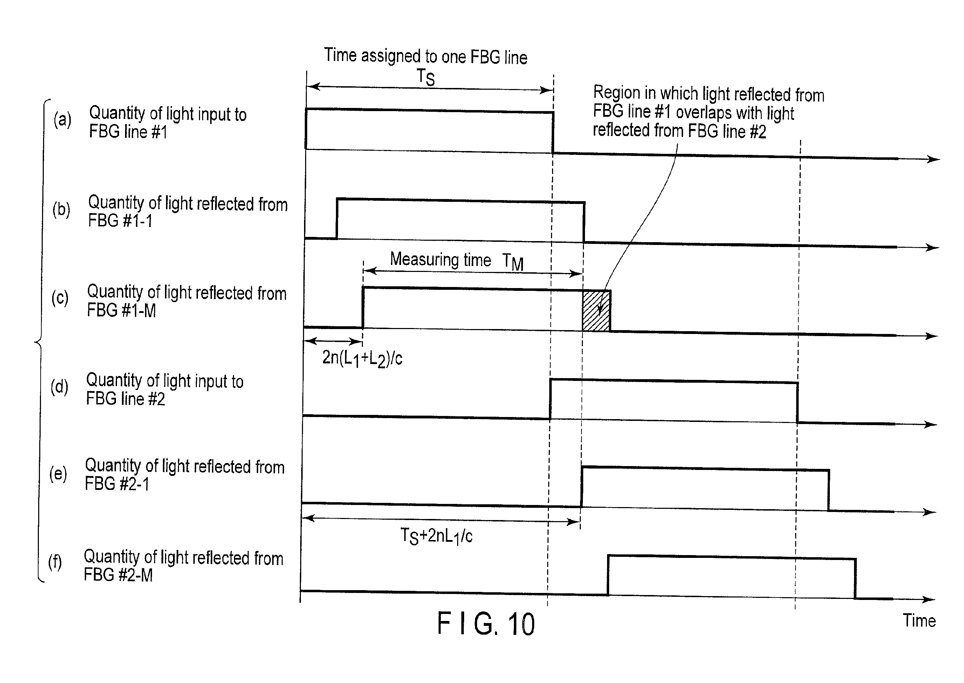

In contrast, in the second embodiment, the light returned from each FBG line 30 does not pass through the optical switch 13. Accordingly, if L1 is beforehand known, the start of calculation as described in a third embodiment below can be shifted in the information processing module 17 by the time required for propagation corresponding to L1, as shown in FIG. 10. Further, the measurable longest distance can be increased because it is sufficient if the following equation (2) is satisfied.

$$L2 < Ts \times c/(2n) \qquad (2)$$

(Third embodiment)

In a third embodiment, a description will be given of the configuration of the control PC 20. As shown in FIGS. 1 and 4, the control PC 20 comprises a sampling processing module 21, a triggering processing module 22, a storage module 23, and an application program processing module 24.

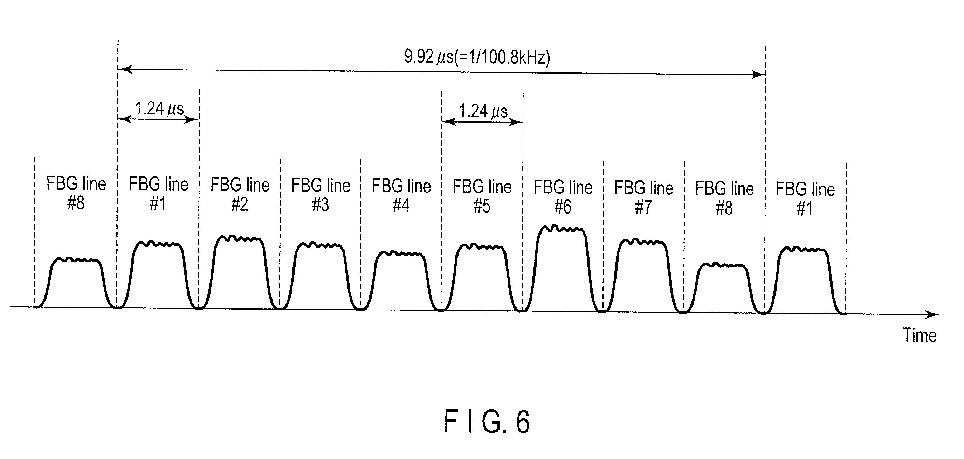

FIG. 6 shows examples of data items input to the sampling processing module 21. FIG. 6 shows, as data examples, the data items output from one of the PDs 16. In synchronism with switching of the first to eighth input/output ports of the optical switch 13, reflected light levels from the respective FBG lines 30 are input. The interval of one FBG line 30 depends upon the setting in the optical switch 13 associated with the switching time, and can be set to, for example, 1.24 $\mu$s.

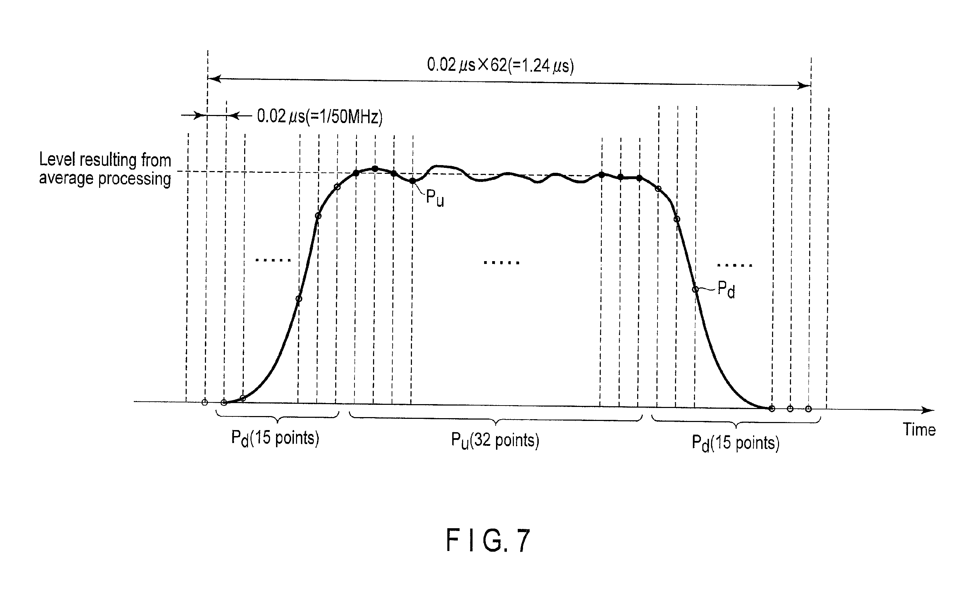

The sampling processing module 21 samples the input data items. FIG. 7 shows sampling examples corresponding to one FBG line 30 shown in FIG. 6. The reflected-light level distribution corresponding to one FBG line 30 is in the shape of substantially a trapezoid widened toward the bottoms. The triggering processing module 22 discards sampling points Pd marked by white dots in the area widened toward the bottoms, and adopts only sampling points Pu of substantially the same level marked by black dots in the area mostly as tops of the trapezoid.

As a result, errors due to the switching times of the actual optical switch, or errors due to variation (linking) in connection loss during conduction, can be reduced, thereby significantly enhancing the measurement accuracy.

The storage module 23 stores the sampling points Pu, adopted by the triggering processing module 22, in association with the input/output ports of the optical switch 13 associated with, for example, time, and with the wavelength channels of the PDs 16. At this time, the storage module 23 may store a reflected-light level obtained by averaging the levels of the sampling points Pu. The application program processing module 24 calculates the reflected wavelengths of certain FBGs in the respective FBG lines 30, using the reflected-light levels detected by the PDs 16 and stored in the storage module 23.

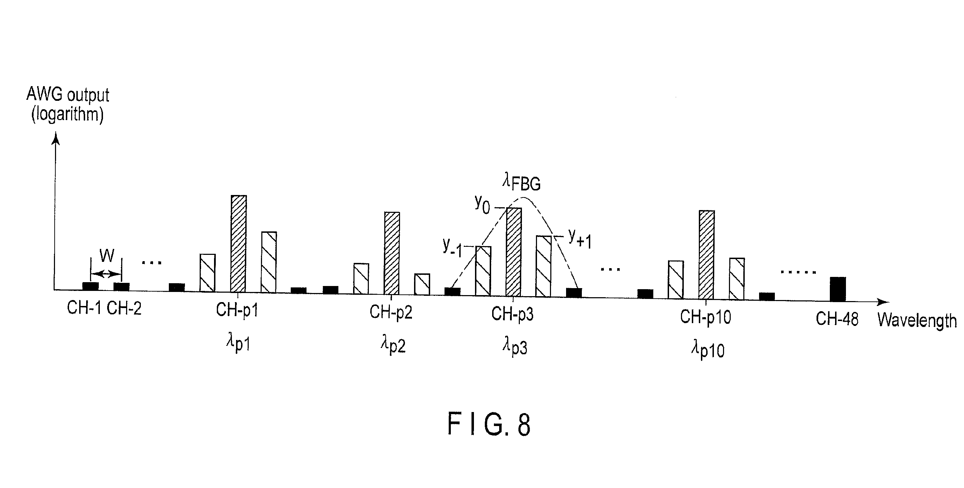

The application program processing module 24 reads, from the storage module 23, the reflected-light levels of the PDs 16 stored in association with each FBG line 30. For instance, it reads the reflected-light levels of ch1 to ch48 at the time point t3 shown in FIG. 3. FIG. 8 shows examples of the reflected-light levels of ch1 to ch48 at the time point t3. If one FBG line 30 includes 10 FBGs connected, and if the reflected wavelength of each FBG falls within the 48 light-receiving ranges of the PDs 16, 10 wavelength channels of local maximum levels exist among the 48 wavelength channels. The reflected wavelengths of the FBGs of each FBG line 30 can be measured using the wavelengths of the local maximum wavelength channels.

In the third embodiment, in the light receiving procedure, a wavelength channel, in which a local maximum level among the detected reflected-light intensities is obtained, is detected, and the light intensities of at least two wavelength channels adjacent to the local maximum level and the local maximum are used to calculate the reflected wavelength of an FBG. For instance, if a local maximum wavelength channel exists in a wavelength channel ch-p3 corresponding to a wavelength $\lambda$p, the reflected level of the local maximum wavelength channel is y0, the reflected levels of channels ch-(p3-1) and ch-(p3+1) are y-1 and y+1, respectively, and the wavelength interval is w, a reflected wavelength $\lambda_{FBG}$

can be obtained by the following equation:

$$\lambda_{FBG} = \lambda_p + \frac{w(y_{+1} - y_{-1})}{2(y_{+1} + y_{-1} - 2y_0)} \qquad (3)$$

In the same way as in the wavelength channel ch-p3, the reflected wavelength $\lambda_{FBG}$ of each of the 10 FBGs is calculated. Thus, the reflected wavelength $\lambda_{FBG}$ of each FBG in one FBG line 30 can be obtained. Although the third embodiment uses the local maximum wavelength channel and the two wavelength channels adjacent thereto, i.e., three wavelength channels in total, a greater number of wavelength channels including the three wavelength channels may be used to calculate the reflected wavelength $\lambda_{FBG}$. In this case, the accuracy of $\lambda_{FBG}$ is enhanced.

By performing the same processing at the other time points as at the time point t3, the reflected wavelengths $\lambda_{FBG}$ of all FBGs in the FBG lines 30 connected to the first to eighth input/output ports of the optical switch 13 can be obtained.

As described above, the embodiments of the invention can provide a physical quantity measuring system and a physical quantity measuring method for simultaneously measuring physical quantities at a plurality of points.

The present invention is applicable to an airplane/space rocket industry, an automotive industry, a shipbuilding industry, etc. The invention is characterized in that measurement of a shock wave due to collision of objects and measurement of vibration in an ultrasonic wave region are realized.

**Claims**

1.  A physical quantity measuring system **characterized by** comprising:

    an optical source (12) configured to emit a measurement light to a plurality of fiber Bragg grating (FBG) lines containing FBGs connected in cascade by an optical fiber, the measurement light including a reflected wavelength of at least one of the FBGs included in the FBG lines;
    an optical switch (13) including a common port for receiving the measurement light from the optical source (12), and a plurality of input/output ports connected to the plurality of FBG lines, the optical switch being configured to output the measurement light from the common port to each of the plurality of input/output ports at different time points;
    a wavelength separator (15) configured to receive light reflected from the respective FBGs of the FBG lines and to separate the reflected light into a plurality of component lights having predetermined wavelengths, after the measurement light is output from one of the input/output ports of the optical switch (13); and
    optical receivers (16) configured to receive the component lights from the wavelength separator (15) and detect light intensities of the component lights.

2.  The physical quantity measuring system of claim 1, **characterized by** further comprising optical circulators (18) interposed between the optical switch (13) and the respective FBG lines and configured to input, to the FBG lines, the measurement light output from the optical switch (13), and to guide light reflected from the FBG lines to the wavelength separator (15).

3.  The physical quantity measuring system of claim 1, **characterized in that** the optical switch (13) is further configured to receive light reflected from the respective FBGs of the FBG lines through the input/output ports, and output the reflected light through the common port,
    further comprising an optical circulator (18) interposed between the optical source (12) and the optical switch (13), and configured to guide the reflected light from the common port of the optical switch (13) to the wavelength separator (15).

4.  The physical quantity measuring system of any one of claims 1 to 3, **characterized in that** the optical switch (13) comprises a lithium niobate ($LiNbO_3$) optical waveguide or a lanthanum-added lead zirconium titanate (PLZT) optical waveguide.

5.  The physical quantity measuring system of any one of claims 1 to 4, **characterized by** further comprising a reflected-wavelength calculator (20) configured to receive light intensity signals corresponding to the component lights of the predetermined wavelengths detected by the optical receivers (16), and to analyze a light intensity of each of the component lights at a time point $t_n$.

6. The physical quantity measuring system of claim 5, **characterized in that** the reflected-wavelength calculator (20) detects a wavelength providing a local maximum light intensity, based on the light intensities of the component lights detected by the optical receivers (16), and calculates the reflected wavelength of the at least one FBG using the light intensity of the wavelength providing the local maximum light intensity and light intensities of component lights with two wavelengths adjacent thereto.

7. The physical quantity measuring system of claim 5 or 6, **characterized in that** the reflected-wavelength calculator (20) obtains light intensities of the component lights by obtaining series of values from the received light intensity signals of the component lights, the series of values being not lower than a predetermined value, and varying within a predetermined range.

8. The physical quantity measuring system of any one of claims 5 to 7, **characterized by** further comprising an information processing module (17) interposed between the optical receivers (16) and the reflected-wavelength calculator (20) to sequentially output, to the reflected-wavelength calculator (20), the light intensity signals of the component lights detected by the optical receivers (16).

9. A physical quantity measuring method **characterized by** comprising:

   inputting, to a common port of an optical switch (13), a measurement light including a reflected wavelength of at least one of FBGs included in FBG lines, with the FBG lines connected to each of a plurality of input/output ports of the optical switch (13), the FBG lines containing the FBGs connected in cascade by an optical fiber;
   outputting the measurement light, input to the optical switch (13), from each of the input/output ports at different time points;
   receiving light reflected from the respective FBGs of the FBG lines, and separating the reflected light into a plurality of component lights having predetermined wavelengths, using a wavelength separator (15); and
   receiving the component lights and detecting light intensities of the component lights, using optical receivers (16).

10. The physical quantity measuring method of claim 9, **characterized by** further comprising inputting, to the FBG lines, the measurement light from the optical switch (13) and guiding light reflected from the FBG lines to the wavelength separator (15), using optical circulators (18) interposed between the optical switch (13) and the respective FBG lines.

11. The physical quantity measuring method of claim 9, **characterized in that** the optical switch (13) is configured to receive light reflected from the respective FBGs of the FBG lines, using the input/output ports, and outputs the reflected light through the common port,
   further comprising inputting, to the common port, the measurement light from an optical source (12) configured to emit the measurement light, and guiding the reflected light from the common port of the optical switch (13) to the wavelength separator (15), using an optical circulator (18) interposed between the optical source (12) and the common port of the optical switch (13).

12. The physical quantity measuring method of any one of claims 9 to 11, **characterized in that** the optical switch (13) comprises a lithium niobate ($LiNbO_3$) optical waveguide or a lanthanum-added lead zirconium titanate (PLZT) optical waveguide.

13. The physical quantity measuring method of any one of claims 9 to 12, **characterized by** further comprising receiving light intensity signals corresponding to the component lights detected by the optical receivers (16), and analyzing a light intensity of each of the component lights at a time point $t_n$, using a reflected-wavelength calculator (20).

14. The physical quantity measuring method of claim 13, **characterized in that** in the analysis by the reflected-wavelength calculator (20), a wavelength providing a local maximum light intensity is detected based on the light intensities of the component lights detected by the optical receivers (16), and the reflected wavelength of the at least one FBG is calculated, using the light intensity of the wavelength providing the local maximum light intensity and light intensities of component lights with two wavelengths adjacent thereto.

15. The physical quantity measuring method of claim 13 or 14, **characterized in that** in the analysis by the reflected-wavelength calculator (20), light intensities of the component lights are obtained by obtaining series of values from the received light intensity signals of the component lights, the series of values being not lower than a predetermined value, and varying within a predetermined range.

16. The physical quantity measuring system of any one of claims 13 to 15, **characterized by** further comprising sequentially outputting, to the reflected-wavelength calculator (20), the light intensity signals of the component lights detected by the optical receivers (16), using an information processing module (17) interposed between the optical receivers (16) and the reflected-wavelength calculator (20).

FIG. 1

FBG sensor monitor

SLD 12

18

13 10

1×8 optical switch

FBG line #1 30
FBG line #2 30
FBG line #8 30

LD driver 11

15

48ch AWG

16 16

24ch PD

24ch PD

Driver 14

PD1

17

Information processing module

FPGA

PCI express

Control PC 20

Sampling processing module 21

Triggering processing module 22

Storage module 23

Application program processing module 24

EP 2 833 102 A2

EP 2 833 102 A2

F I G. 2

Light intensity of FBG line 30#3

F I G. 3

11

F I G. 4

EP 2 833 102 A2

L₁ L₂

| | | |
|---|---|---|
| FBG#1-1 | FBG#1-2 | FBG#1-M |
| FBG#2-1 | FBG#2-2 | FBG#2-M |
| FBG#8-1 | FBG#8-2 | FBG#8-M |

FBG
sensor monitor

**F I G. 5A**

Time assigned to one FBG line
$T_S$

Switching time
$T$

Measuring time
$T_M$

Switching time
$T$

**F I G. 5B**

Time

FBG line #8 | FBG line #1 | FBG line #2 | FBG line #3 | FBG line #4 | FBG line #5 | FBG line #6 | FBG line #7 | FBG line #8 | FBG line #1

1.24 μs

1.24 μs

9.92 μs(=1/100.8kHz)

Time

F I G. 6

F I G. 7

F I G. 8

EP 2 833 102 A2

F I G. 9

Time assigned to one FBG line
$T_S$

(a) Quantity of light input to FBG line #1

(b) Quantity of light reflected from FBG #1-1

Light cut by optical switch

(c) Quantity of light reflected from FBG #1-M

Measuring time $T_M$

$2n(L_1+L_2)/c$

(d) Quantity of light input to FBG line #2

(e) Quantity of light reflected from FBG #2-1

(f) Quantity of light reflected from FBG #2-M

Time

EP 2 833 102 A2

Time assigned to one FBG line
$T_S$

(a) Quantity of light input to FBG line #1

Region in which light reflected from FBG line #1 overlaps with light reflected from FBG line #2

(b) Quantity of light reflected from FBG #1-1

(c) Quantity of light reflected from FBG #1-M

Measuring time $T_M$

$2n(L_1+L_2)/c$

(d) Quantity of light input to FBG line #2

(e) Quantity of light reflected from FBG #2-1

$T_S+2nL_1/c$

(f) Quantity of light reflected from FBG #2-M

F I G. 10

Time

EP 2 833 102 A2

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000180270 A
- JP 2008151574 A
- JP 2002352369 A
- JP 8088643 A
- JP 2004056700 A